(19) Europäisches Patentamt
European Patent Office
Office européen des brevets

(11) EP 1 884 357 B1

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
***B32B 27/36*** *(2006.01)*

(21) Anmeldenummer: **07014649.3**

(22) Anmeldetag: **26.07.2007**

# (54) Folie mit glatter Oberfläche und guter Wickelbarkeit

Film with a smooth surface and good coilability

Feuille dotée d’une surface plane et d’une enroulabilité correcte

(84) Benannte Vertragsstaaten:
**AT DE FR GB IT LU**

(30) Priorität: **03.08.2006 DE 102006036236**

(43) Veröffentlichungstag der Anmeldung:
**06.02.2008 Patentblatt 2008/06**

(73) Patentinhaber: **Mitsubishi Polyester Film GmbH
65203 Wiesbaden (DE)**

(72) Erfinder:
- **Klein, Dagmar, Dr.
55437 Ockenheim (DE)**
- **Kuhmann, Bodo
65594 Runkel (DE)**
- **Klein, Oliver, Dr.
55437 Ockenheim (DE)**
- **Hilkert, Gottfried, Dr.
55291 Saulheim (DE)**
- **Wiederhold, Manfred
65195 Wiesbaden (DE)**

(74) Vertreter: **Schweitzer, Klaus et al
Plate Schweitzer Zounek
Patentanwälte
Rheingaustrasse 196
65203 Wiesbaden (DE)**

(56) Entgegenhaltungen:
**JP-A- 2000 043 094 US-A1- 2005 061 708**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 884 357 B1

## Beschreibung

Die Erfindung betrifft eine transparente, dreischichtige, biaxial orientierte Polyesterfolie mit einer glatten Oberfläche A, die keine externen Partikel aufweist, und einer rauen Oberfläche C, die ein organisches Pigment in Form eines inkompatiblen Polymers enthält. Die Erfindung betrifft weiterhin ein Verfahren zur Herstellung der Folie und ihre Verwendung.

Die Folie ist insbesondere für die Erzeugung von Formteilen mit einer sehr gleichmäßigen Oberfläche in Verfahren mit Druck- und Temperaturbeaufschlagung wie beispielsweise dem In- Mold- Decoration (IMD)- Verfahren geeignet. Bei diesem Verfahren wird eine Polyesterfolie zunächst einseitig mit einer Release- Beschichtung versehen, auf die dann ein Lack appliziert wird, welcher- je nach Anforderung- beispielsweise bedruckt oder metallisiert wird. Es ist prinzipiell ebenfalls möglich, lediglich eine Bedruckung oder Metallisierung auf die Release- Beschichtung aufzubringen. Über die Bedruckung/ Metallisierung wird dann abschließend ein Haftvermittler appliziert, der die spätere Haftung von Lack und Bedruckung/ Metallisierung auf dem fertigen Bauteil garantiert. Diese so beschichtete Polyesterfolie wird dann formschlüssig in eine Spritzgussform eingelegt (meist durch Anlegen eines Unterdrucks) und mit einem passenden Kunststoff ausgespritzt. Anschließend wird der Folienverbund an der Releaseschicht getrennt, so dass die Lackschicht die oberste Schicht des Bauteils darstellt. Aus dieser Verfahrensbeschreibung wird klar, dass der schützenden Polyesterfolie eine entscheidende Bedeutung zukommt, insbesondere was die spätere Optik des fertigen Bauteils anbelangt. Jede kleinste Unebenheit auf der Polyesterfolie wird auf der Lackschicht abgebildet und stört die Optik des fertigen Bauteils. Aus diesem Grund werden für diese Anwendung Polyesterfolien benötigt mit mindestens einer sehr glatten Oberfläche. Solche glatten Polyesterfolien haben aber den Nachteil, dass sie sich nicht wickeln und damit im Prinzip nicht herstellen lassen, weil sie extrem blocken. Um dies zu vermeiden, muss man in die der glatten Seite der Folie entgegengesetzte Seite so genannte Antiblockmittel (Partikel) einarbeiten, die eine Wickelung ermöglichen. Die Einarbeitung von Partikeln in eine Oberflächenschicht einer Polyesterfolie hat jedoch den Nachteil, dass sich die durch die Partikel gebildete Topographie dieser Oberflächenschicht während des In- Mold- Decoration- Verfahrens auf das Formteil teilweise überträgt und wiederum zu den oben erwähnten Störungen in der Optik des fertigen Bauteils führt. Die Optimierung einer Polyesterfolie für die IMD- Anwendung erfordert demnach eine Optimierung von zwei gegenläufigen Eigenschaften: zum einen Glattheit (d. h. Rauheit, Glanz) auf einer Folienoberfläche und zum anderen gutes Herstellungs- / Verarbeitungsverhalten (Verhinderung des Blockverhaltens) auf der anderen Folienoberfläche.

## Stand der Technik

Folien mit einer glatten Oberfläche A sind nach dem Stand der Technik bekannt.

So enthalten Folien entsprechend dem Beispiel 6 der EP-A-0 903 221 sowie Folien der Beispiele 1 und 2 aus EP-A-1 410 903 in der Oberflächenschicht A keine externen Pigmente. Die Folie hat demzufolge eine glatte Oberfläche A. Für die Erreichung einer guten Wickelbarkeit dieser Folien wird in allen Fällen ein anorganisches Pigment in die Oberfläche C der Folie zugegeben. Für eine Anwendung der Folie zur Erzeugung von Formteilen mit einer sehr gleichmäßigen Oberfläche in einem Verfahren mit Druck- und Temperaturbeaufschlagung ist die Verwendung eines anorganischen Pigmentes nicht geeignet.

Die EP-A-0 088 635 beschreibt eine koextrudierte, biaxial orientierte Polyesterfolie mit wenigstens zwei Schichten, von denen eine Schicht A aus thermoplastischem Polymer besteht und eine Schicht B thermoplastisches Polymer und feine Teilchen enthält. Die Folie ist dadurch gekennzeichnet, dass die Oberflächenrauigkeit $R_a$ der äußeren Oberfläche der Schicht A kleiner als 5 nm ist und die äußere Oberfläche der Schicht B entweder

- eine Oberfläche mit einer Oberflächenrauigkeit $R_a$ von 5 bis 40 nm ist und eine Vielzahl von Vertiefungen und eine Vielzahl von Vorsprüngen aufweist, die in einer bestimmten Anordnung angeordnet sind, oder
- eine Oberfläche ist, die auf einer ebenen Fläche gebildete Vorsprünge aufweist und deren Oberfläche mit einer Schicht C bedeckt ist, die aus einem Schmiermittel besteht und eine Oberflächenrauhigkeit $R_a$ von 5 bis 40 nm aufweist.

Die Topographie der Oberfläche B wird durch interne und/oder anorganische Partikel gebildet. Eine solche Folie ist für die Herstellung von Formteilen mit gleichmäßiger Oberfläche ungeeignet.

Die DE-A-22 30 970 beschreibt ein magnetisches Aufzeichnungsmedium, das aus einer biaxial orientierten Polyesterfolie und einer dünnen magnetischen metallischen Schicht auf der Oberfläche A der Polyesterfolie zusammengesetzt ist. Die Folie besteht aus einer glatten, teilchenfreien Oberfläche und einer relativ rauen Oberfläche, die Teilchen verschiedener harter Polymere enthält. In der Schrift finden sich keinerlei Hinweise darauf, wie die Folienzusammensetzung im Hinblick auf die Topographie einer solchen Folie und die Eignung zur Herstellung von Formteilen mit gleichmäßiger Oberfläche eingestellt werden soll und wie die Verarbeitbarkeit einer solchen Folie ist.

EP- A- 1 215 043 beschreibt eine Folie bestehend aus einem Polyester und einem weiteren, von diesem

Polyester verschiedenen thermoplastischen Harz. Die Topographie der Oberfläche einer Folie bestehend aus diesen zwei Polymeren wird beschrieben. Bei den Folien der Beispiele 1 bis 7 handelt es sich um Monofolien oder koextrudierte Folien, die in jeder Schicht einen Polyester und ein von diesem Polyester verschiedenes thermoplastisches Harz sowie zum Teil anorganische Partikel enthalten. Aufgrund ihrer beidseitig vorhandenen Rauheit und der Verwendung von anorganischen Partikeln sind die Folien für die Herstellung von Formteilen mit gleichmäßiger Oberfläche in Verfahren mit Druck- und Temperaturbeaufschlagung ungeeignet.

Auf dem Markt sind auch Folien erhältlich, die keinerlei externe Pigmente enthalten (z. B. Hostaphan® GN, Mitsubishi Polyesterfilm GmbH, Wiesbaden, DE). Aufgrund ihres extremen Blockverhaltens (rutschgehemmt) sind diese Folien verbesserungswürdig, insbesondere für die kostengünstige Herstellung und Verarbeitung auf schnelllaufenden Maschinen.

Bisher bekannte Folien sind für die Herstellung von Formteilen mit gleichmäßiger Oberfläche ungeeignet. Insbesondere ist das Verarbeitungsverhalten dieser Folien im In- Mold- Decoration- Verfahren verbesserungswürdig.

US 2005/061708 A1 beschreibt eine coextrudierte, transparente, biaxial orientierte Polyesterfolie, die eine Basisschicht (B) und eine heisssiegelbare und gegenüber APET peelfähige Deckschicht (A) enthält, wobei die heisssiegelbare und peelfähige Deckschicht (A) aus (a) 60-97 Gew.-% Polyester und (b) 3-30 Gew.-% einem polyesterunverträglichem Polymer, jeweils bezogen auf die Masse der Deckschicht (A) besteht. In einer Ausführungsform werden Cycloolefinpolymere als polyesterunverträgliche Polymere verwendet. Eine zweite Polyesterschicht kann zudem auf die andere Seite der Schicht (A) aufgebracht werden.

## Aufgabenstellung

Aufgabe der vorliegenden Erfindung war es, eine transparente, biaxial orientierte Polyesterfolie zur Verfügung zu stellen, die sich insbesondere für die Verarbeitung im In- Mold- Decoration- Prozess (IMD- Prozess) eignet. Die Folie soll eine sehr glatte und homogene Oberfläche aufweisen, die bei der Herstellung von Formteilen mit gleichmäßiger Oberfläche eine gute Qualität der Formteiloberfläche gewährleistet. Gleichzeitig soll die erfindungsgemäße Folie keinen Einfluss auf die Oberflächenrauheit des Produktes des IMD- Prozesses durch die vorhandene Topographie der Folienrückseite bei der Herstellung des Formteils unter Druck- und Temperaturbeaufschlagung ausüben. Trotzdem soll die Wickelqualität der Rolle sowohl bei der Herstellung der Folie als auch bei der Verarbeitung im IMD- Prozess gewährleistet sein. Zusammengefasst bestand die Aufgabe darin, eine Folie mit folgender Merkmalkombination zur Verfügung zu stellen:

- niedrige Oberflächenrauheit der Folie auf mindestens einer Folienseite ($R_a \leq 15$ nm, Rt $\leq 300$ nm),
- keine Beeinflussung der Topographie des im IMD-Prozess unter Druck- und Temperaturbehandlung hergestellten Produktes durch die Topographie der Folienrückseite,
- gute Herstellbarkeit und gute Verarbeitbarkeit der Folie,
- hoher Glanz der Folienoberfläche mit niedriger Rauheit (Glanz bei 20°: $\geq 120$).

## Lösung der Aufgabe

Gelöst wird die Aufgabe durch eine transparente, dreischichtige, koextrudierte, biaxial orientierte Polyesterfolie mit einer Basisschicht B, die zu mindestens 80 Gew.-% aus einem thermoplastischen Polyester besteht, und zwei Deckschichten A und C, wobei

a) die Deckschicht A keine externen Partikel enthält und
b) die Deckschicht C neben einem thermoplastischen Polyester ein weiteres von dem thermoplastischen Polyester verschiedenes, polyester-inkompatibles, unvernetztes Polymer in einer Menge von 2 bis 30 Gew.-% enthält und
c) die Oberfläche der Deckschicht C eine Anzahl von Erhebungen N pro mm$^2$ Folienoberfläche mit einer Höhe von > 0,2 $\mu$m und < 0,5 $\mu$m aufweist mit

$$20 \leq N \leq 200.$$

Zweckmäßigerweise weist die Oberfläche der Deckschicht C keine Erhebungen > 0,5 $\mu$m auf. Da solche Erhebungen nachträglich - beispielsweise durch Staub - auf die Folienoberfläche gelangen können, trifft diese Aussage in den meisten Fällen nur für Folien direkt nach der Herstellung bzw. für frische (verpackte) oder sorgfältig behandelte (geöffnete) Kundenrollen zu.

Unter , Erhebungen' im Sinne der vorliegenden Erfindung werden Erhebungen verstanden, die aus der planaren, orientierten Folienoberfläche hervorragen.

Unter , externen Partikeln' werden solche Partikel verstanden, die dem Polymeren bei der Herstellung oder danach zugesetzt werden und nicht für die Herstellung des Polymeren benötigt werden. Keine externen Partikel im erfindungsgemäßen Sinne sind demnach z. B. Katalysatoren wie Manganacetat oder Antimontrioxid oder Quencher wie Phosphate. Externe Partikel sind beispielsweise Siliciumdioxid, Calciumcarbonat, Bariumsulfat, Kaolin, Aluminiumoxid oder Zirkondioxid.

Erfindungsgemäß ist die Folie dreischichtig. Sie umfasst als Schichten eine Basisschicht B, eine partikelfreie, hochglänzende Oberflächenschicht A und auf der anderen Seite der Basisschicht B eine weitere Oberflächenschicht C aus Polyethylenterephthalat. Diese Schicht C enthält das für die Herstellung (insbesondere die Wickelbarkeit) und Verarbeitung der Folie förderliche polyester-inkompatible, unvernetzte Polymer.

**Basisschicht B**

Die Basisschicht B der Folie besteht bevorzugt zu mindestens 90 Gew.- % aus einem thermoplastischen Polyester. Dafür geeignet sind Polyester aus Ethylenglykol und Terephthalsäure (= Polyethylenterephthalat, PET) , aus Ethylenglykol und Naphthalin- 2, 6- dicarbonsäure (= Polyethylen- 2, 6- naphthalat, PEN) , aus 1, 4- Bis- hydroximethyl-cyclohexan und Terephthalsäure (= Poly- 1, 4- cyclohexandimethylen- terephthalat, PCDT) sowie aus Ethylenglykol, Naphthalin- 2, 6- dicarbonsäure und Biphenyl- 4, 4'- dicarbonsäure (= Polyethylen- 2, 6- naphthalatbibenzoat, PENBB) . Besonders bevorzugt sind Polyester, die zu mindestens 90 Mol- %, bevorzugt mindestens 95 Mol- %, aus Ethylenglykol- und Terephthalsäure- Einheiten oder aus Ethylenglykol- und Naphthalin- 2, 6- dicarbonsäure- Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO- $(CH_2)_n$- OH, wobei n eine ganze Zahl von 3 bis 6 darstellt (insbesondere Propan- 1, 3-diol, Butan- 1, 4- diol, Pentan- 1, 5- diol und Hexan- 1, 6- diol) oder verzweigte aliphatische Glykole mit bis zu 6 Kohlenstoff- Atomen. Von den cycloaliphatischen Diolen sind Cyclohexandiole (insbesondere Cyclohexan- 1, 4- diol) zu nennen. Geeignete andere aromatische Diole entsprechen beispielsweise der Formel HO- $C_6H_4$- X- $C_6H_4$- OH, wobei X für- $CH_2$-, -C $(CH_3)_2$-, -C $(CF_3)_2$-, -O-, -S- oder- $SO_2$- steht. Daneben sind auch Bisphenole der Formel HO- $C_6H_4$-$C_6H_4$- OH gut geeignet.

Andere aromatische Dicarbonsäuren sind bevorzugt Benzoldicarbonsäuren, Naphthalindicarbonsäuren (beispielsweise Naphthalin- 1, 4- oder- 1, 6- dicarbonsäure) , Biphenyl- x, x'- dicarbonsäuren (insbesondere Biphenyl- 4, 4'- dicarbonsäure) , Diphenylacetylen- x, x'- dicarbonsäuren (insbesondere Diphenylacetylen- 4, 4'- dicarbonsäure) oder Stilben- x, x'- dicarbonsäuren. Von den cycloaliphatischen Dicarbonsäuren sind Cyclohexandicarbonsäuren (insbesondere Cyclohexan- 1, 4- dicarbonsäure) zu nennen. Von den aliphatischen Dicarbonsäuren sind die ($C_3$- $C_{19}$)- Alkandisäuren besonders geeignet, wobei der Alkanteil geradkettig oder verzweigt sein kann.

Allgemein werden die Polyester nach literaturbekannten Verfahren aus den genannten Diolen und Dicarbonsäuren oder Dicarbonsäureestern hergestellt. Die Herstellung der Polyester kann sowohl nach dem Umesterungsverfahren mit den üblichen Katalysatoren wie z. B. Zn-, Ca-, Li- und Mn-Salzen oder nach dem Direktveresterungsverfahren erfolgen. Bevorzugte Polykondensationskatalysatoren sind Antimon- oder Germaniumverbindungen. Besonders bevorzugt sind jedoch Titanverbindungen. Werden Antimonverbindungen eingesetzt, so liegt der Gehalt an Antimon in der Folie, bezogen auf das eingesetzte Metall, in einer bevorzugten Ausführungsform bei weniger als 210 ppm und besonders bevorzugt bei weniger als 70 ppm. Bevorzugt wird Antimontriacetat (z. B. S21 von Atofina/FR) eingesetzt. Besonders bevorzugt werden titanbasierte Katalysatoren eingesetzt wie z. B. VERTEC® AC420 von Johnson Matthey oder C94 von Acordis. Der Gehalt an Titan liegt dabei bevorzugt unter 60 ppm und besonders bevorzugt unter 20 ppm.

**Deckschicht A**

Für die Deckschicht A können prinzipiell die gleichen Polymere verwendet werden wie für die Basisschicht B.

Als besonders geeignete Verfahren für die Herstellung der Polyester der Deckschicht A haben sich solche Verfahren erwiesen, bei denen Umesterungskatalysatoren eingesetzt werden, bei denen die Glattheit der Oberfläche der Deckschicht A der Folie nur wenig gestört wird. Bevorzugt sind hierbei insbesondere Magnesium- und Mangan-Salze. Diese Umesterungskatalysatoren werden besonders bei der Herstellung des Basisrohstoffes und der Herstellung des Rohstoffes für die Deckschicht A verwendet.

Folien mit der geforderten glatten Oberfläche A werden erhalten, wenn Rohstoffe eingesetzt werden, die z. B. unter Verwendung von Mn-, Mg- oder Ca-Umesterungskatalysatoren verwendet werden, bei denen der Mn-Gehalt im Bereich von 50 bis 200 ppm oder der Mg-Gehalt im Bereich von 70 bis 300 ppm oder der Ca-Gehalt im Bereich von 50 bis 300 ppm liegt. Hierdurch werden sehr kleine interne Partikel erzeugt (so genannte Katalysatorpräzipitate), die zu Folien mit der erfindungsgemäßen glatten Oberfläche führen. Es sind prinzipiell aber auch andere Umesterungskatalysatoren einsetzbar.

Neben den oben beschriebenen Polymeren können in der Deckschicht A auch andere Materialien enthalten sein, wobei dann die Deckschicht A bevorzugt aus einem Gemisch von Polymeren oder einem Copolymeren besteht, welches Ethylen- 2, 6- naphthalat- Einheiten und Ethylenterephthalat- Einheiten enthält. Bis zu 10 Mol- % der Polymeren der Deckschicht A können aus weiteren Comonomeren (z. B. Ethylen- 2, 6- naphthalat- Einheiten, s. o.) bestehen.

Die Deckschicht A weist bevorzugt 0 bis 15, besonders bevorzugt 0 bis 12 und ganz besonders bevorzugt 0 bis 10 Erhebungen pro $mm^2$ mit Höhen im Bereich von >0,1 bis <0,3 µm auf.

**Deckschicht C**

Für die andere Schicht (Deckschicht C) können prinzipiell die gleichen Polymeren verwendet werden wie zuvor für die Basisschicht B und die Deckschicht A beschrieben. Zusätzlich wird ein weiteres polyester-inkompatibles, vernetztes Polymer verwendet.

Die Basisschicht B und die beiden anderen Schichten können zusätzlich übliche Additive wie beispielsweise Flammschutzmittel, UV- oder Hydrolyse-Stabilisatoren enthalten. Sie werden zweckmäßig dem Polymer bzw. der Polymermischung bereits vor dem Aufschmelzen zugesetzt. Als Stabilisatoren können beispielsweise Phosphorverbindungen wie Phosphorsäure oder Phosphorsäureester eingesetzt werden.

**Partikelfreiheit, polyester-inkompatibles Polymer**

Die Deckschicht A der Folie nach der vorliegenden Erfindung enthält keine externen Pigmente, sie ist frei von externen Partikeln.

Die Deckschicht C der Folie nach der vorliegenden Erfindung enthält zur Einstellung der Wickeleigenschaften ein polyester-inkompatibles Polymer, ausgewählt aus den unten beschriebenen Cycloolefinpolymeren.

Die Konzentration des inkompatiblen Polymeren beträgt bevorzugt 2 bis 30 Gew.-% und besonders bevorzugt 5 bis 20 Gew.-%, bezogen auf die Deckschicht C. Bevorzugt wird als inkompatibles Polymer ein Cycloolefinpolymer (CO) verwendet. Die Glasübergangstemperatur des COs liegt bevorzugt im Bereich von 70 bis 270 °C und besonders bevorzugt im Bereich von 90 bis 250 °C.

Das inkompatible Polymer wird der C-Schicht zweckmäßigerweise in Form eines Gemisches aus 70 bis 98 Gew.-% Polyethylenterephthalat (PET) und 2 bis 30 Gew.-% CO oder eines vorgefertigten Blends aus 70 bis 98 Gew.-% PET und 2 bis 30 Gew.-% CO zugegeben.

Cycloolefinpolymere (COs) sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere (COs) geeignet, die 0,1 bis 100 Gew.-%, bevorzugt 10 bis 99 Gew.-%, besonders bevorzugt 50 bis 95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefine der Formeln I, II, III, IV, V oder VI aufgebaut sind:

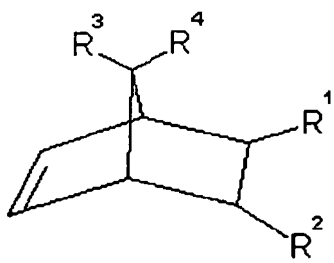 (I)

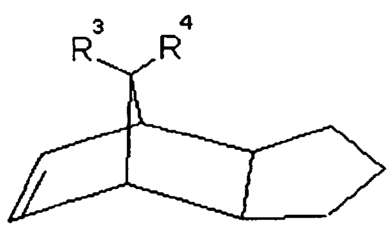 (II)

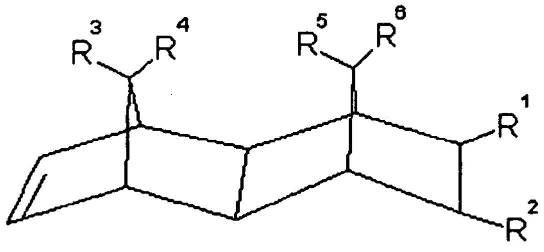

(III)

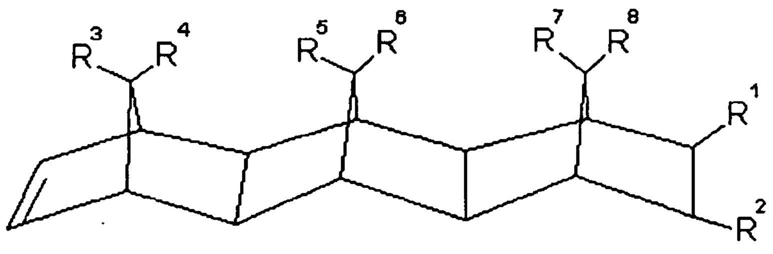

(IV)

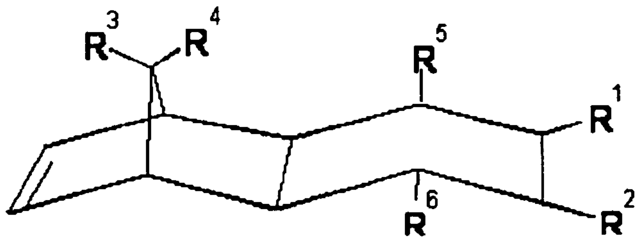

(V)

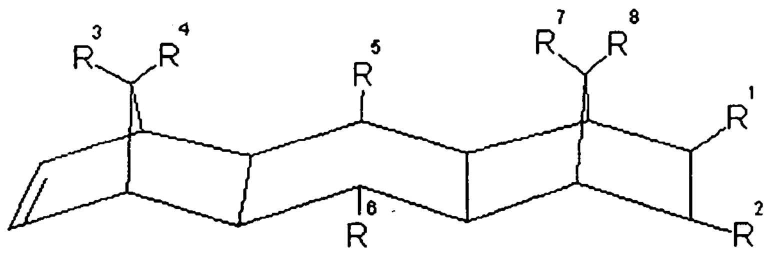

(VI)

In diesen Formeln sind $R^1$, $R^2$, $R^3$, $R^4$, $R^5$, $R^6$, $R^7$ und $R^8$ gleich oder verschieden und bedeuten ein Wasserstoffatom oder einen $C_1$- $C_{30}$- Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$- $C_{30}$- Kohlenwasserstoffreste sind beispielsweise lineare oder verzweigte $C_1$- $C_8$- Alkylreste, $C_6$- $C_{18}$- Arylreste, $C_7$- $C_{20}$- Alkylenarylreste oder cyclische $C_3$- $C_{20}$- Alkylreste oder acyclische $C_2$- $C_{20}$- Alkenylreste.

Gegebenenfalls können die Cycloolefinpolymere 0 bis 45 Gew.-%, bezogen auf die Gesamtmasse des Cycloolefinpolymeren, polymerisierte Einheiten mindestens eines monocyclischen Olefins der Formel VII enthalten:

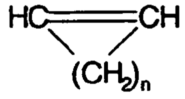

**(VII)**

Hierin ist n eine Zahl von 2 bis 10.

Gegebenenfalls können die Cycloolefinpolymere 0 bis 99 Gew.-%, bezogen auf die Gesamtmasse des Cycloolefinpolymeren, polymerisierte Einheiten eines acyclischen Olefins der Formel VIII enthalten:

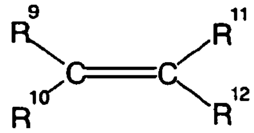

(VIII)

Hierin sind $R^9$, $R^{10}$, $R^{11}$, und $R^{12}$ gleich oder verschieden und bedeuten ein Wasserstoffatom oder $C_1$- $C_{10}$-Kohlenwasserstoffrest, z. B. einen $C_1$- $C_8$- Alkylrest oder $C_6$- $C_{14}$- Arylrest.

Dabei sind als acyclische Olefine solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bevorzugt 5 bis 80 Gew.-%, besonders bevorzugt 10 bis 60 Gew.-%, bezogen auf das Gesamtgewicht des jeweiligen Cycloolefinpolymers.

Ebenfalls prinzipiell geeignet sind Cycloolefinpolymere, welche durch ringöffnende Polymerisation mindestens eines der Monomeren der Formeln I bis VI und anschließende Hydrierung erhalten werden.

Cycloolefinhomopolymere sind aus einem Monomeren der Formeln I bis VI aufgebaut. Diese Cycloolefin-Polymere sind für die Zwecke der vorliegenden Erfindung weniger geeignet. Für die Zwecke der vorliegenden Erfindung sind Cycloolefincopolymerisate (COCs) besser geeignet, welche mindestens ein Cycloolefin der Formeln I bis VI und acyclische Olefine der Formel VIII als Comonomer enthalten. Unter den vorstehend beschriebenen Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch Cycloolefincopolymere (COCs), die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-%, enthalten (bezogen auf das Gewicht des Copolymeren).

Die vorstehend generisch beschriebenen Cycloolefinpolymere weisen im allgemeinen Glasübergangstemperaturen zwischen -20 °C und 400 °C auf. Für die Erfindung sind Cycloolefinpolymerisate (COs), insbesondere Cycloolefincopolymerisate (COCs) verwendbar, die eine Glasübergangstemperatur von größer als 70 °C, vorzugsweise größer als 90 °C, aufweisen.

Die Herstellung der Cycloolefinpolymere (COs) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD- 109 224, DD- 237 070 und EP- A- 0 156 464 beschrieben. EP- A- 0 283 164, EP- A- 0 407 870, EP- A- 0 485 893 und EP- A- 0 503 422 beschreiben die Herstellung von Cycloolefincopolymeren (COCs) mit Katalysatoren, basierend auf löslichen Metallocenkomplexen. Auf die in oben genannten Schriften beschriebenen Herstellungsverfahren von Cycloolefinpolymeren wird hiermit ausdrücklich Bezug genommen. Viele der oben genannten COs bzw. COCs können kommerziell erworben werden, z. B. Topas® 8007 oder 6015 (Norbornen/ Ethylen- Copolymer) , Ticona, DE.

Die Cycloolefinpolymere werden entweder als reines Granulat oder als granuliertes Konzentrat (Masterbatch) in die Folie eingearbeitet, indem das Polyestergranulat oder- pulver mit dem Cycloolefinpolymer (CO) bzw. dem Cycloolefinpolymer- Masterbatch (CO- Masterbatch) vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, wenn die Extrusionstemperatur oberhalb der Glasübergangstemperatur $T_g$ des Cycloolefinpolymeren (COs) liegt, im allgemeinen mindestens 5°C, vorzugsweise 10 bis 230 °C, insbesondere 15 bis 180 °C und besonders bevorzugt 20 bis 150 °C, über der Glasübergangstemperatur des Cycloolefinpolymeren (COs) .

Die Menge des inkompatiblen Polymers ist so auszuwählen, dass die Oberfläche der Deckschicht C eine Anzahl von Erhebungen N pro $mm^2$ Folienoberfläche aufweist mit einer Höhe von > 0,2 $\mu$m und < 0,5 $\mu$m mit $20 \leq N \leq 200$ (Gleichung (1)).

Zweckmäßigerweise weist die Oberfläche der Deckschicht C keine Erhebungen > 0,5 $\mu$m auf. Da solche Erhebungen nachträglich - beispielsweise durch Staub - auf die Folienoberfläche gelangen können, trifft diese Aussage in den meisten Fällen nur für Folien direkt nach der Herstellung bzw. für frische (verpackte) oder sorgfältig behandelte (geöffnete) Kundenrollen zu.

Weist die Deckschicht C der Folie nach der vorliegenden Erfindung eine Topographie auf, bei der die Anzahl der Erhebungen unterhalb des durch die Gleichung (1) gekennzeichneten Bereiches fallen, so ist die Herstellung der Folie schwierig und das Verarbeitungsverhalten unzureichend. Die Folie neigt zum Verblocken.

Weist die Deckschicht C der Folie nach der vorliegenden Erfindung eine Topographie auf, bei der die Anzahl der Erhebungen oberhalb des durch die Gleichung (1) gekennzeichneten Bereiches fallen, so beeinflusst die Topographie der Deckschicht C die Oberflächenrauheit des Produktes des IMD-Prozesses bei der Herstellung des Formteils unter Druck- und Temperaturbeaufschlagung.

Bei der Folie nach der vorliegenden Erfindung ist die Dicke der Deckschicht A im allgemeinen größer als 1,0

μm und liegt im Bereich von 1,0 μm und 7,0 μm, vorteilhaft im Bereich von 1,2 bis 6,0 μm, insbesondere im Bereich von 1,5 bis 5,0 μm und ganz besonders bevorzugt im Bereich von 2,0 bis 4,0 μm.

Bei der Folie nach der vorliegenden Erfindung ist die Dicke der Deckschicht C im allgemeinen größer als 0,5 μm und liegt im Bereich von 0,6 μm bis 4,0 μm, vorteilhaft im Bereich von 0,8 bis 3,0 μm, insbesondere im Bereich von 0,9 bis 2,5 μm und ganz besonders bevorzugt im Bereich von 1,0 bis 2,0 μm.

Die Deckschichten A und C können gleich oder verschieden dick sein.

Die Gesamtdicke der erfindungsgemäßen Polyesterfolie kann innerhalb weiter Grenzen variieren und richtet sich nach dem beabsichtigten Verwendungszweck. Sie beträgt üblicherweise 12 bis 125 μm, insbesondere 23 bis 75 μm und vorzugsweise 36 bis 50 μm.

Überraschenderweise wurde gefunden, dass sich die erfindungsgemäße Folie ohne verarbeitungstechnische Probleme herstellen und wickeln lässt. Weiterhin zeigt sie überraschenderweise sehr gute Eigenschaften bei der Erzeugung von Formteilen mit einer sehr gleichmäßigen Oberfläche in Verfahren mit Druck- und Temperaturbeaufschlagung wie beispielsweise dem In- Mold- Decoration- Verfahren und eine gute Verarbeitbarkeit im IMD- Prozess.

**Herstellverfahren**

Zur Herstellung der Deckschichten A und C werden entsprechende Granulate der Deckschichtrohstoffe zwei Extrudern zugeführt. Die Materialien werden aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze abfiltrieren. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell durchgeführt. Dabei wird vorzugsweise erst in Längsrichtung (d. h. in Maschinenrichtung) und anschließend in Querrichtung (d. h. senkrecht zur Maschinenrichtung) verstreckt. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130°C und die Querstreckung bei 90 bis 150 °C durchgeführt. Das Längsstreckverhältnis liegt im Bereich von 3:1 bis 6:1, bevorzugt von 3,5:1 bis 5,5:1. Das Querstreckverhältnis liegt allgemein im Bereich von 3,0:1 bis 5,0:1, bevorzugt von 3,5:1 bis 4,5:1.

Vor der Querstreckung kann man eine oder beide Oberfläche(n) der Folie nach den bekannten Verfahren inline beschichten. Die In-line-Beschichtung kann beispielsweise zu einer verbesserten Haftung einer weiteren Schicht wie beispielsweise einer Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Zur Einstellung weiterer gewünschter Eigenschaften kann die Folie beschichtet oder corona- bzw. flammvorbehandelt sein. Typische Beschichtungen sind haftvermittelnde, antistatisch, schlupfverbessernd oder dehäsiv wirkende Schichten. Es bietet sich an, diese zusätzlichen Schichten über In-line-Coating mittels wässriger Dispersionen vor der Querverstreckung auf die Folie aufzubringen.

Bei der Herstellung der Folie ist gewährleistet, dass das Regenerat in einer Konzentration von 20 bis 50 Gew.-%, bezogen auf das Gesamtgewicht der Folie, wieder verwendet werden kann, ohne dass dabei die physikalischen Eigenschaften der Folie nennenswert negativ beeinflusst werden.

Die Folie eignet sich hervorragend für die Erzeugung von Formteilen mit einer sehr gleichmäßigen Oberfläche in Verfahren mit Druck- und Temperaturbeaufschlagung wie beispielsweise dem In- Mold- Decoration- Verfahren.

Zusammengefasst zeichnet sich die erfindungsgemäße Folie durch eine hohe Oberflächenglätte der Deckschicht A und einen hohen Glanz auf dieser Seite aus. Weiterhin besitzt die Folie ein gutes Wickel- und Verarbeitungsverhalten und zeigt keinen negativen Einfluss in Form eines Transfers der Topographie der Folienrückseite auf die im IMD-Prozess hergestellten Formteile.

Der Glanz der Folienoberfläche A, gemessen unter einem Winkel von 20°, ist ≥ 120. In einer bevorzugten Ausführungsform beträgt der Glanz dieser Seite ≥ 125 und in einer besonders bevorzugten Ausführungsform ≥ 130.

Unter einer transparenten Folie im Sinne der vorliegenden Erfindung, versteht man Folien mit einer Trübung von ≤ 10,0 %. Bevorzugt ist die Trübung ≤ 9,5 % und besonders bevorzugt ≤ 9,0 %.

Der Reibungskoeffizient der Deckschichten C gegeneinander beträgt ≤ 0,60, bevorzugt ≤ 0,55 und besonders bevorzugt ≤ 0,50.

Die Folie besitzt eine Rauheit der Oberfläche A von $R_a \leq 0{,}015$ μm und $R_t \leq 0{,}30$ μm, insbesondere von $R_a \leq$

0,012 $\mu$m und $R_t \leq 0,25$ $\mu$m und vorzugsweise von $R_a \leq 0,010$ $\mu$m und $R_t \leq 0,20$ $\mu$m.

Die Rauheit der Oberfläche C beträgt $R_a$ 0,015 bis 0,030$\mu$m und $R_t$ 0,15 bis 0,55 $\mu$m, insbesondere $R_a$ 0,016 bis 0,029 $\mu$m und $R_t$ 0,16 bis 0,52 $\mu$m und vorzugsweise $R_a$ 0,017 bis 0,028 $\mu$m und $R_t$ 0,17 bis 0,50 $\mu$m.

Die Oberfläche C weist eine Anzahl von Erhebungen N pro $mm^2$ Folienoberfläche auf mit einer Höhe von > 0,2 $\mu$m und < 0,5 $\mu$m mit $20 \leq N \leq 200$. Zweckmäßigerweise weist die Oberfläche der Deckschicht C keine Erhebungen > 0,5 $\mu$m auf. Diese Aussage trifft in den meisten Fällen nur für Folien direkt nach der Herstellung bzw. für frische (verpackte) oder sorgfältig behandelte (geöffnete) Kundenrollen zu.

Die nachstehende Tabelle (Tabelle 1) fasst die wichtigsten erfindungsgemäßen Folieneigenschaften noch einmal zusammen.

**Tabelle 1**

| | erfindungsgemäßer Bereich | bevorzugt | besonders bevorzugt | Einheit | Messmethode |
|---|---|---|---|---|---|
| Glanz, Seite A (Messwinkel 20°) | ≥ 120 | ≥ 125 | ≥ 130 | | DIN 67 530 |
| Trübung | ≤ 10,0 | ≤ 9,5 | ≤ 9,0 | % | ASTM-D 1003-61, Methode A |
| Reibungskoeffizient: C- Seite gegen sich | selbst ≤ 0,60 | ≤0,55 | ≤ 0,50 | | DIN 53 375 |
| Dichte | 1, 388- 1, 400 | 1, 389- 1, 399 | 1, 390- 1, 398 | $g/cm^3$ | ASTM D1505-68 Methode C |
| mittlere Rauheit $R_a$ A-Seite | ≤ 0,015 | ≤ 0,012 | ≤ 0,010 | $\mu$m | DIN 4768, bei einem Cut-off von 0,25 nm |
| mittlere Rauheit $R_t$ A-Seite | ≤ 0,30 | ≤ 0,25 | ≤ 0,20 | $\mu$m | DIN 4768, bei einem Cut-off von 0,25 nm |
| mittlere Rauheit $R_a$ C-Seite | 0,015 - 0,030 | 0,016 - 0,029 | 0,017 - 0,028 | $\mu$m | DIN 4768, bei einem Cut-off von 0,25 nm |
| mittlere Rauheit $R_t$ C-Seite | 0,15-0,55 | 0,16-0,52 | 0,17-0,50 | $\mu$m | DIN 4768, bei einem Cut-off von 0,25 nm |
| Topographie A-Seite | 0-15 | 0-12 | 0-10 | Erhebungen/$mm^2$ mit Höhe >0,1, <0,3 $\mu$m | interne Methode |
| Topographie C-Seite | 20-200 | 21-195 | 22-190 | Erhebungen/$mm^2$ mit Höhe > 0,2, < 0,5 $\mu$m | interne Methode |

Zur Charakterisierung der Rohstoffe und der Folien wurden die folgenden Methoden benutzt:

(1) Glanz

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

(2) Trübung

Die Trübung wurde gemäß ASTM- D1003- 61, Methode A, bestimmt.

(3) Reibung

Die Reibung wurde nach DIN 53375 bestimmt. Die Reibung wurde mindestens 14 Tage nach der Produktion gemessen. Ein Verblocken findet statt, wenn der Reibwert größer als 1 ist oder bei der Reibkraftmessung in der Reibkraft-Weg- Verlauf- Messung Unstetigkeitsstellen auftreten.

(4) Dichte

Die Dichte der Folie wurde nach ASTM D1505-68, Methode C, bestimmt.

(5) Rauigkeit $R_a$ und $R_t$

Die Rauigkeiten $R_a$ und $R_t$ wurden nach DIN 4768 mit einem Cut-off von 0,25 mm bestimmt.

(6) Topographie

Die Topographie der Oberfläche wurde mit einem Weißlicht-Interferometrie-Mikroskop der Firma Veeco, Typ Wyko NT3300, bestimmt. Gemessen wurde eine Fläche von 0,92 mm x 1,21 mm (480 x 736 Pixel) bei 5,1-facher Vergrößerung. Zur Messung wurde die Probe in einen Ring (Durchmesser 40 mm) eingespannt Die Messung erfolgte im VSI-Modus (phase shifting interferometry). Die Messlänge in z-Richtung wurde auf 10 μm festgelegt. Eine eventuelle Welligkeit des Musters wurde herausgefiltert.

Zur Analyse der Erhebungen wurde die so genannte Multi-Region-Analysis verwendet. Hierbei wurde die Messfläche nach zusammenhängenden Regionen untersucht, die höher als 0,1 μm im Falle der Deckschicht A und 0,2 μm im Falle der Deckschicht C sind. Allerdings wurden nur Regionen berücksichtigt, die eine Größe von mindestens 5 Bildpunkten haben.

(7) Eignung im IMD-Prozess

Zur Bestimmung der Eignung der Folie im IMD-Prozess wurde ein DIN A4 großes Handmuster der Folie verwendet. Die Folie wird mit der glatten Seite A zur Einspritzseite in einem Spritzgusswerkzeug fixiert und ein Formteil gefertigt. Das Formteil wird visuell auf seine Oberflächenqualität untersucht und beurteilt. Eine sehr gute Beurteilung bedeutet, dass die Anzahl der sichtbaren Defekte wie beispielsweise Dellen oder andere optische Unregelmäßigkeiten der Oberfläche bei 1 bis 5 Ereignissen liegt. Eine gute Beurteilung wird bei einer Anzahl von 6 bis 10 Ereignissen gegeben, und eine schlechte Beurteilung liegt bei einer Anzahl von mehr als 10 Ereignissen vor.

**Beispiel 1**

Chips aus Polyethylenterephthalat (hergestellt nach dem Umesterungsverfahren mit Mn als Umesterungskatalysator, Mn-Konzentration: 100 ppm) wurden bei 160 °C auf eine Restfeuchte von unterhalb 50 ppm getrocknet und dem Extruder für die Basisschicht B zugeführt.

Daneben wurden Chips aus Polyethylenterephthalat (hergestellt über das Umesterungsverfahren mit Mn als Umesterungskatalysator, Mn-Konzentration: 100 ppm), ebenfalls bei 160 °C auf eine Restfeuchte von unterhalb 50 ppm getrocknet und den jeweiligen Extrudern für die Deckschichten A und C zugeführt. Das Granulat für die Deckschicht A enthält keine externen Pigmente, das Granulat für die Deckschicht C enthält das für die Verarbeitung der Folie förderliche polyester-inkompatible Polymer und keine externen Pigmente.

Es wurde durch Koextrusion und anschließende stufenweise Orientierung in Längs- und Querrichtung eine transparente, dreischichtige Folie mit ABC-Aufbau und einer Gesamtdicke von 36 μm hergestellt. Die Dicke der jeweiligen Schichten ist der Tabelle 2 zu entnehmen.

Deckschicht A, Mischung aus:

| | |
|---|---|
| 100 Gew.-% | Polyethylenterephthalat (Invista, V003, Offenbach, DE) |

(fortgesetzt)

| | |
|---|---|
| Basisschicht B: | |
| 100 Gew.-% | Polyethylenterephthalat (Invista, V003, Offenbach, DE) |
| Deckschicht C, Mischung aus: | |
| 90 Gew.-% | Polyethylenterephthalat (Invista, V003, Offenbach, DE) |
| 10 Gew.-% | COC Topas 6015 (Fa. Ticona , DE) |

Die Herstellungsbedingungen in den einzelnen Verfahrensschritten waren:

| | | | |
|---|---|---|---|
| Extrusion: | Temperaturen | A-Schicht: | 290 °C |
| | | B-Schicht: | 290 °C |
| | | C-Schicht: | 290 °C |
| | Temperatur der Abzugswalze: | | 30 °C |
| Längsstreckung: | Temperatur: | | 75 bis 110 °C |
| | (Aufheizung 75-110 °C, Längsstreckung bei 110 °C) | | |
| | Längsstreckverhältnis: | | 4,0 |
| Querstreckung: | Temperatur: | | 115 - 130 °C |
| | Querstreckverhältnis: | | 4,1 |
| Fixierung: | Temperatur: | | 240 °C |

Die Folie hatte die geforderten Verarbeitungseigenschaften und eine gute Beurteilung der Eignung für den IMD-Prozess. Der Folienaufbau und die erzielten Eigenschaften derart hergestellter Folien sind den Tabellen 2 und 3 zu entnehmen.

**Beispiel 2**

Entsprechend Beispiel 1 wurde durch Koextrusion und anschließende stufenweise Orientierung in Längs- und Querrichtung eine transparente, dreischichtige Folie mit ABC-Aufbau und einer Gesamtdicke von 36 μm hergestellt. Im Vergleich zu Beispiel 1 wurde nur die Deckschicht C geändert.

| | |
|---|---|
| Deckschicht C, Mischung aus: | |
| 95 Gew.-% | Polyethylenterephthalat (Invista, V003, Offenbach, DE) |
| 5 Gew.-% | COC Topas 6015 (Fa. Ticona, DE) |

Die Verfahrensbedingungen für die Folie waren für alle Schichten wie in Beispiel 1 gewählt.

**Beispiel 3**

Entsprechend Beispiel 1 wurde durch Koextrusion und anschließende stufenweise Orientierung in Längs- und Querrichtung eine transparente, dreischichtige Folie mit ABC-Aufbau und einer Gesamtdicke von 36 μm hergestellt. Im Vergleich zu Beispiel 1 wurde nur die Deckschicht C geändert.

| | |
|---|---|
| Deckschicht C, Mischung aus: | |
| 90 Gew.-% | Polyethylenterephthalat (Invista, V003, Offenbach, DE) |
| 10 Gew.-% | COC Topas 8007 (Fa. Ticona, DE) |

Die Verfahrensbedingungen für die Folie waren für alle Schichten wie in Beispiel 1 gewählt.

**Vergleichsbeispiel 1**

Entsprechend Beispiel 1 wurde durch Koextrusion und anschließende stufenweise Orientierung in Längs- und Querrichtung eine transparente, dreischichtige Folie mit ABC-Aufbau und einer Gesamtdicke von 36 μm hergestellt. Im Vergleich zu Beispiel 1 wurde nur die Deckschicht C geändert.

Deckschicht C, Mischung aus:

| | |
|---|---|
| 88 Gew.-% | Polyethylenterephthalat (Invista, V003, Offenbach, DE) |
| 12 Gew.-% | Masterbatch aus 97,75 Gew.-% Polyethylenterephthalat und 1,0 Gew.-% Sylobloc® 44 H (Fa. Grace) und 1,25 Gew.-% Aerosil® TT 600 (Fa. Degussa); in beiden Fällen handelt es sich um $SiO_2$. |

Die Verfahrensbedingungen für die Folie waren für alle Schichten wie in Beispiel 1 gewählt.

Die Folie ist nicht für die Erzeugung von Formteilen mit einer sehr gleichmäßigen Oberfläche in Verfahren mit Druck- und Temperaturbeaufschlagung wie beispielsweise dem In- Mold- Decoration- Verfahren geeignet.

**Vergleichsbeispiel 2**

Es wurde das Beispiel 6 der EP- 0 903 221 nachgearbeitet. Die Folie ist nicht für die Erzeugung von Formteilen mit einer sehr gleichmäßigen Oberfläche in Verfahren mit Druck- und Temperaturbeaufschlagung wie beispielsweise dem In- Mold- Decoration- Verfahren geeignet.

**Vergleichsbeispiel 3**

Durch Einlagenextrusion und anschließende stufenweise Orientierung in Längs- und Querrichtung wurde eine Monofolie mit einer Gesamtdicke von 36 $\mu$m hergestellt.

Die Folie enthält keine externen Partikel.

Die Folie ist zwar für die Erzeugung von Formteilen mit einer sehr gleichmäßigen Oberfläche in Verfahren mit Druck- und Temperaturbeaufschlagung geeignet, jedoch ist ihr Verarbeitungsverhalten nicht ausreichend gut. Die Folie lässt sich aufgrund starken Verblockens nicht wickeln.

**Tabelle 2**

| Beispiel | Foliendicke | Folienaufbau | Schichtdicken | Pigmente in den Schichten | | | mittlerer Pigment-Durchmesser | | | Pigmentkonzentrationen | | |
|---|---|---|---|---|---|---|---|---|---|---|---|---|
| | µm | | A B C µm | A | B | C | A | B | C µm | A | B ppm | C |
| Beispiel 1 | 36 | ABC | 2, 0/33, 0/1, 0 | keine | keine | Topas 6015 | | | | 0 | 0 | 0 |
| Beispiel 2 | 36 | ABC | 2, 0/33, 0/1, 0 | keine | keine | Topas 6015 | | | | 0 | 0 | 0 |
| Beispiel 2 | 36 | ABC | 2, 0/33, 0/1, 0 | keine | keine | Topas 8007 | | | | 0 | 0 | 0 |
| VB 1 | 36 | ABC | 2, 0/32, 0/2, 0 | keine | keine | Sylobloc 44 H<br>Aerosil TT 600 | | | 3,1-3,9<br>0,04 | 0 | 0 | 1200<br>1250 |
| VB 2 | 12 | ABC | 1, 0/9, 5/1, 5 | keine | keine | Sylobloc 44 H<br>Aerosil TT 600 | | | 3,1-3,9<br>0,04 | 0 | 0 | 800<br>800 |
| VB 3 | 36 | A | - | keine | keine | keine | | | | 0 | 0 | 0 |

**Tabelle 3**

| Beispiele | Glanz, Seite A (Messwinkel 20°) | Trübung % | Reibungskoeffizient<br>C-Seite gegen sich selbst | Dichte | Mittlere Rauheit $R_a$ A-Seite µm | Mittlere Rauheit $R_t$ A-Seite µm | Mittlere Rauheit $R_a$ C-Seite µm | Mittlere Rauheit $R_t$ C-Seite µm | Topographie A-Seite, Peaks > 0,1<0,3 µm | Topographie C-Seite, Peaks > 0,2<0,5 µm | Topographie C-Seite, Peaks > 0,5 µm | Eignung im IMD-Prozess |
|---|---|---|---|---|---|---|---|---|---|---|---|---|
| Beispiel 1 | 138 | 8,9 | 0,33 | 1,396 | 0,006 | 0,102 | 0,021 | 0,239 | 9 | 187 | 0 | sehr gut |
| Beispiel 2 | 172 | 4,3 | 0,33 | 1,397 | 0,005 | 0,087 | 0,018 | 0,193 | 6 | 25 | 0 | gut |
| Beispiel 2 | 145 | 5,7 | 0,36 | 1,397 | 0,008 | 0,106 | 0,020 | 0,240 | 6 | 55 | 0 | sehr gut |
| VB 1 | 200 | 1,7 | 0,35 | 1,398 | 0,005 | 0,070 | 0,053 | 0,623 | 4 | 389 | 100 | schlecht |
| VB 2 | 200 | 1,1 | 0,4 | 1,398 | 0,011 | 0,055 | 0,060 | 0,585 | 77 | 184 | 35 | schlecht |
| VB 3 | 200 | 0,5 | >1 | 1,398 | 0,005 | 0,072 | 0,009 | 0,080 | 8 | 9 | 0 | gut/ schlecht *) |

*): Erzeugung von Formteilen mit einer sehr gleichmäßigen Oberfläche in Verfahren mit Druck- und Temperaturbeaufschlagung: gut
Verarbeitungsverhalten: schlecht

## Patentansprüche

1. Transparente, dreischichtige, koextrudierte, biaxial orientierte Polyesterfolie mit einer Basisschicht B, die zu mindestens 80 Gew.-% aus einem thermoplastischen Polyester besteht, und zwei Deckschichten A und C, **dadurch gekennzeichnet, dass**

   a) die Deckschicht A frei von externen Partikeln ist und
   b) die Deckschicht C neben einem thermoplastischen Polyester ein weiteres von dem thermoplastischen Polyester verschiedenes, polyester-inkompatibles, unvernetztes Polymer in einer Menge von 2 bis 30 Gew.-% enthält und
   c) die Oberfläche der Deckschicht C eine Anzahl von Erhebungen N pro $mm^2$ Folienoberfläche mit einer Höhe von > 0,2 μm und < 0,5 μm aufweist mit $20 \leq N \leq 200$.

2. Polyesterfolie nach Anspruch 1, **dadurch gekennzeichnet, dass** die Oberfläche der Deckschicht C keine Erhebungen > 0,5 μm aufweist.

3. Polyesterfolie nach Anspruch 1 oder 2, **dadurch gekennzeichnet, dass** der Glanz der Oberfläche der Deckschicht A ≥ 120 (bei einem Messwinkel von 20°) ist.

4. Polyesterfolie nach Anspruch 1, 2 oder 3, **dadurch gekennzeichnet, dass** die Trübung der Folge ≤ 10,0 % ist.

5. Polyesterfolie nach einem der Ansprüche 1 bis 4, **dadurch gekennzeichnet, dass** die Oberfläche der Deckschicht A eine Rauheit $R_a$ von ≤ 0,015 μm aufweist.

6. Polyesterfolie nach einem der Ansprüche 1 bis 5, **dadurch gekennzeichnet, dass** die Oberfläche der Deckschicht C eine Rauheit $R_a$ von 0,015 bis 0,030 μm aufweist.

7. Polyesterfolie nach einem der Ansprüche 1 bis 6, **dadurch gekennzeichnet, dass** die Oberfläche der Deckschicht A 0 bis 15 Erhebungen N pro $mm^2$ Folienoberfläche mit einer Höhe von > 0,1 μm und < 0,3 μm aufweist.

8. Polyesterfolie nach einem der Ansprüche 1 bis 7, **dadurch gekennzeichnet, dass** das polyester-inkompatible, unvernetzte Polymer ein Cycloolefinpolymer oder Cycloolefincopolymer ist.

9. Polyesterfolie nach einem der Ansprüche 1 bis 8, **dadurch gekennzeichnet, dass** das polyester-inkompatible, unvernetzte Polymer ein Norbornen-Ethylen-Copolymer oder Tetracyclododecen-Ethylen-Copolymer ist.

10. Verfahren zur Herstellung einer Polyesterfolie nach Anspruch 1, **dadurch gekennzeichnet, dass** man die Rohstoffe der Basisschicht B und der Deckschichten A und C aufschmilzt, in einer Mehrschichtdüse zu flachen Schmelzefilmen ausformt und übereinander schichtet, anschließend den erhaltenen Mehrschichtfilm mit Hilfe einer Kühlwalze abzieht und dann in Längs- und in Querrichtung biaxial orientiert, hitzefixiert und anschließend die erhaltene Folie aufwickelt, **dadurch gekennzeichnet, dass** der Rohstoff für die Deckschicht A frei von externen Partikeln ist und der Rohstoff für die Deckschicht C neben einem thermoplastischen Polyester ein weiteres von dem thermoplastischen Polyester verschiedenes, polyester-inkompatibles, unvernetztes Polymer in einer Menge von 2 bis 30 Gew.-% enthält.

11. Verwendung einer Polyesterfolie nach einem der Ansprüche 1 bis 9 für die Erzeugung von Formteilen mit einer sehr gleichmäßigen Oberfläche in Verfahren mit Druck- und Temperaturbeaufschlagung.

12. Verwendung nach Anspruch 11 im In-Mold-Decoration-Verfahren.

## Claims

1. A transparent, three-layer, coextruded, biaxially oriented polyester film with a base layer B, which is composed of at least 80 % by weight of a thermoplastic polyester, and two outer layers A and C, wherein

   a) the outer layer A is free from external particles, and
   b) the outer layer C comprises, alongside a thermoplastic polyester, an amount of from 2 to 30 % by weight of a further polyesterincompatible, uncrosslinked polymer other than the thermoplastic polyester, and

c) the surface of the outer layer C has a number N of elevations per mm$^2$ of film surface whose height is > 0.2 μm and < 0.5 μm, where 20 ≤ N ≤ 200.

**2.** The polyester film as claimed in claim 1, wherein the surface of the outer layer C has no elevations > 0.5 μm.

**3.** The polyester film as claimed in claim 1 or 2, wherein the gloss of the surface of the outer layer A is ≥ 120 (at an angle of measurement of 20 °).

**4.** The polyester film as claimed in claim 1, 2, or 3, whose haze is ≤ 10.0 %.

**5.** The polyester film as claimed in any of claims 1 to 4, wherein the roughness $R_a$ of the surface of the outer layer A is ≤ 0.015 μm.

**6.** The polyester film as claimed in any of claims 1 to 5, wherein the roughness $R_a$ of the surface of the outer layer C is from 0.015 to 0.030 μm.

**7.** The polyester film as claimed in any of claims 1 to 6, wherein the surface of the outer layer A has from 0 to 15 elevations N per mm$^2$ of film surface whose height is > 0.1 μm and < 0.3 μm.

**8.** The polyester film as claimed in any of claims 1 to 7, wherein the polyester-incompatible, uncrosslinked polymer is a cycloolefin polymer or cycloolefin copolymer.

**9.** The polyester film as claimed in any of claims 1 to 8, wherein the polyester-incompatible, uncrosslinked polymer is a norbornene-ethylene copolymer or tetracyclododecene-ethylene copolymer.

**10.** A process for production of a polyester film as claimed in claim 1, which comprises melting the raw materials for the base layer B and for the outer layers A and C, shaping them in a coextrusion die to give flat melt films and mutually superposing them to form layers, and then drawing off the resultant multilayer film with the aid of a chill roll and then biaxially orienting longitudinally and transversely, and heat-setting, and then winding the resultant film, which comprises, in the raw material for the outer layer A, the absence of external particles, and, in the raw material for the outer layer C, the presence, alongside a thermoplastic polyester, of an amount of from 2 to 30 % by weight of a further, polyester-incompatible, uncrosslinked polymer other than the thermoplastic polyester.

**11.** The use of a polyester film as claimed in any of claims 1 to 9 for the production of moldings with a very uniform surface in processes with exposure to pressure and temperature.

**12.** The use as claimed in claim 11 in the in-mold-decoration process.

## Revendications

**1.** Feuille de polyester, transparente, à trois couches, coextrudée et orientée de façon biaxiale, avec une couche de base B qui est constituée d'au moins 80 % en poids d'un polyester thermoplastique et avec deux couches de couverture A et C, **caractérisée en ce que**

a) la couche de couverture A est exempte de particules externes et
b) la couche de couverture C contient, outre un polyester thermoplastique, 2 à 30 % en poids d'un autre polymère non réticulé, incompatible avec le polyester et différent du polyester thermoplastique, et
c) la surface de la couche de couverture C a un nombre N de bosses de hauteur > 0,2 μm et < 0,5 μm par mm$^2$ de surface de feuille, avec 20 ≤ N ≤ 200.

**2.** Feuille de polyester selon la revendication 1, **caractérisée en ce que** la surface de la couche de couverture C n'a pas de bosses > 0,5 μm.

**3.** Feuille de polyester selon la revendication 1 ou 2, **caractérisée en ce que** la brillance de la surface de la couche de couverture A est ≥ 120 (pour un angle de mesure de 20°).

**4.** Feuille de polyester selon la revendication 1, 2 ou 3, **caractérisée en ce que** l'opacité de la feuille est ≤ 10,0%.

5. Feuille de polyester selon l'une des revendications 1 à 4, **caractérisée en ce que** la surface de la couche de couverture A a une rugosité $R_a \leq 0, 0 15\ \mu m$.

6. Feuille de polyester selon l'une des revendications 1 à 5, **caractérisée en ce que** la surface de la couche de couverture C a une rugosité $R_a$ comprise entre 0,015 et 0,030 $\mu$m.

7. Feuille de polyester selon l'une des revendications 1 à 6, **caractérisée en ce que** la surface de la couche de couverture A a un nombre N de 0 à 15 bosses de hauteur > 0,1 $\mu$m et < 0,3 $\mu$m par $mm^2$ de surface de feuille.

8. Feuille de polyester selon l'une des revendications 1 à 7, **caractérisée en ce que** le polymère non réticulé, incompatible avec le polyester, est un polymère d'oléfine cyclique ou un copolymère d'oléfine cyclique.

9. Feuille de polyester selon l'une des revendications 1 à 8, **caractérisée en ce que** le polymère non réticulé, incompatible avec le polyester, est un copolymère d'éthylène-norbornène ou un copolymère d'éthylène-tétracyclododécène.

10. Procédé de fabrication d'une feuille de polyester selon la revendication 1, **caractérisé en ce qu'**on effectue une fusion des matières premières de la couche de base B et des couches de couverture A et C, **en ce qu'**on les forme dans une filière à multicouche en des films de fusion plats et on les superpose puis **en ce qu'**on tire le film multicouche obtenu à l'aide d'un cylindre de refroidissement et **en ce qu'**on l'oriente de façon biaxiale dans le sens longitudinal et dans le sens transversal et on le fixe à la chaleur et enfin **en ce qu'**on enroule la feuille obtenue et **caractérisé en ce que** la matière première pour la couche de couverture A est exempte de particules externes et la matière première pour la couche de couverture C contient outre un polyester thermoplastique 2 à 30 % en poids d'un autre polymère non réticulé, incompatible avec le polyester et différent du polyester thermoplastique.

11. Utilisation d'une feuille de polyester selon l'une des revendications 1 à 9 pour la production de pièces formées ayant une surface très régulière dans un procédé avec application de pression et de chaleur.

12. Utilisation selon la revendication 11 dans le procédé de décoration dans le moule (IMD, In Mold Decoration).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0903221 A
- EP 1410903 A
- EP 0088635 A
- DE 2230970 A
- EP 1215043 A
- US 2005061708 A1
- DD 109224
- DD 237070
- EP 0156464 A
- EP 0283164 A
- EP 0407870 A
- EP 0485893 A
- EP 0503422 A